# EUROPEAN PATENT SPECIFICATION

(11) **EP 0 546 806 B1**
(45) Date of publication and mention of the grant of the patent: **20.05.1998**
(21) Application number: 92311187.6
(22) Date of filing: 08.12.1992
(51) Int. Cl.: H04B 7/08

(54) **Space diversity receiver**
Raumdiversions-Empfänger
Récepteur en diversité d'espace

(30) Priority: 11.12.1991 FI 915834
(43) Date of publication of application: 16.06.1993
(73) Proprietor: NOKIA MOBILE PHONES LTD., 24101 Salo (FI)
(72) Inventor: Rapeli, Juha, SF-90570 Oulu (FI)
(74) Representative: Frain, Timothy John

(56) References cited:
- EP-A- 0 348 187
- WO-A-81/00333
- US-A- 4 326 294
- PATENT ABSTRACTS OF JAPAN vol. 011, no. 294 (E-544)22 September 1987 & JP-A-62 094 033
- PATENT ABSTRACTS OF JAPAN vol. 009, no. 251 (E-348)8 October 1985 & JP-A-60 100 841

## Description

The invention relates to a space diversity radio receiver for a radio telephone.

Currently, as the use of radio telephones is on the increase, efforts are being made to reduce the power of the radio frequencies utilized by them, on the one hand in order to increase the capacity of the radio network and on the other hand to eliminate the health risk of the users of radio telephones. This results in contradiction, as users are demanding increasingly improved audibility and interferencefree reception even though they are accustomed to moving in field conditions poor for radio reception, for example in buildings. Previously, the accustomed method has been to compensate for the poor conditions by increasing radio power. On the other hand, in poor reception conditions users have been disturbed by slight changes in the quality of the reception, caused by movements of only a few centimeters, i.e. the location sensitivity of reception.

In order to overcome the location sensitivity mentioned above, there is known, for example, in radio links, the use of a plurality of antennas, usually two, for socalled space diversity reception. In this case, if the signal received by one antenna fades, a stronger signal received by the other antenna can be used. For this purpose, the receiver has circuits for monitoring the strength of each received signal and for selecting the stronger signal. In space diversity the starting point is that the signals arriving at the antennas are of random phase in relation to each other.

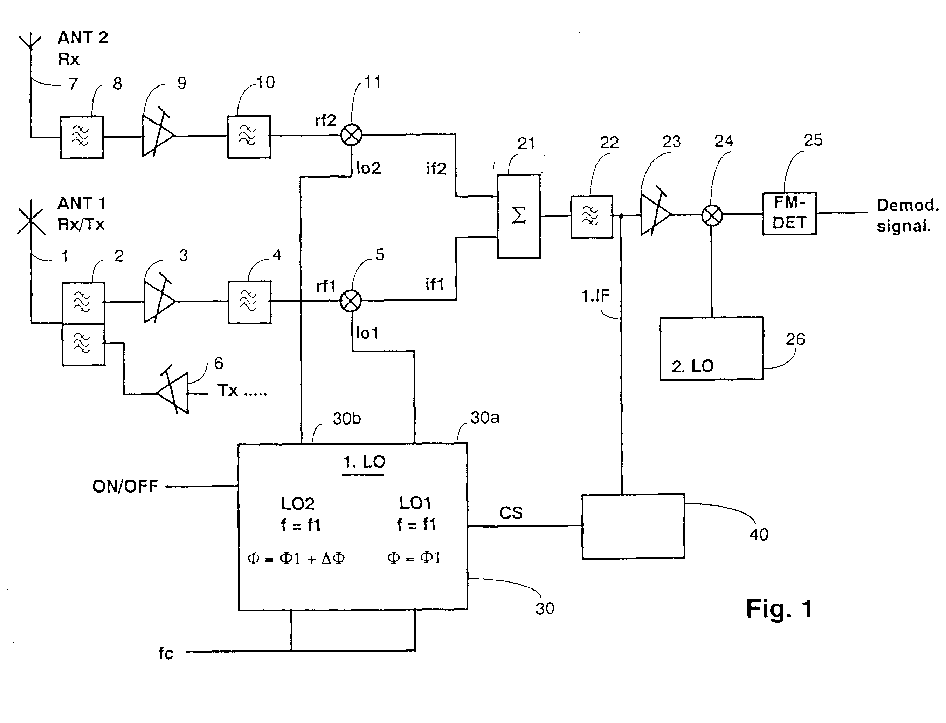

The idea of implementing space diversity in such a way that two independently received RF signals are combined with, one of them being phase shifted, is presented in US-patent 2,786,133 (E. Dyke, March 19, 1957). In said patent, phase shifting is accomplished with a motor-driven phase shifter which is impossible in handheld equipment. The idea has been further developed by using several 90 degrees delay circuits in combinations to provide stepwise ± 90° or ± 180° phase shifts (Fig. 8 of EP-A- 0,199,058, published 29 October 1986) or 90° phase skipper combined with a ± 45° continuously variable phase shifter (US 4,160,952; 1978). Phase shifting has been done either at RF or IF signal (US 4,079,318). WO 81/00333 discloses a space diversity radio receiver comprising two antennas, two mixers connected to ones of the antennas, wherein each mixer is supplied with a mixing frequency signal and provides an intermediate frequency signal, means for summing the intermediate frequency signal to obtain a sum signal, and a control circuit responsive to the sum signal, to regulate in a closed loop phase differences between the intermediate frequency signals so as to establish, for example, an acceptable trade-off between reduced inband, amplitude dispersion and power output. A single phase shifter is used to adjust the phase of one of the mixing frequencies. In another embodiment, further means including another local oscillator are used to predict the way in which said phase shifter may need to be driven to cope with future conditions.

The limited scope of prior art is connected to inacurracy and uncontrollability of phase shift using known technology. In a typical case the phases of a digitally controlled phase shift element is neither 0° nor 90°. Thus, available phase shifts are inaccurate in general and especially in crossing the point between 0° and 360°, making continuous phase control impossible.

EP-A3-348187 discloses a protective casing for a handheld portable radio telephone has at least one antenna built therein which is usable in place of a antenna which is built in on the telephone. When two antennas are provided in the protective casing, the one of them which has the more intense electric field than the other is automatically selected during the course of conversation.

According to the invention, the problem is solved using the features of Claim 1. In a preferred embodiment the receiver has two antennas the signals of which are downmixed, phased in such a way that their sum will reach its maximum. What is involved in the arrangement according to the invention is not a diversity receiver in the sense that the signals arriving at the antennas would be of random phase in relation to each other, but their phases float from the viewpoint of the receiver at a slowly changing speed in relation to each other, and remain momentarily even stationary. The floating speed of the phases depends on the conditions and on the movements of the receiver.

This invention provides means for continuous unlimited phase shifting with simple, implementable solution and adds a new dimension space diversity:

Continuous phase rotation which is needed in use, i.e. in such a situation in which a user is turning around while being in speech connection via a dual antenna space diversity receiver. It could be imagined that the first antenna location is unchanged whereby the location of the other antenna is changed an unknown fraction of the wavelength during a turn, to which situation the method disclosed herein, responds with a constantly varying phase shift over time.

The invention makes it possible to have optimum reception during the whole movement.

In the maximizing circuit the phasing of the local oscillators can be implemented simply by using a frequency synthesizer known per se (Patent Application FI 900303, "Interpolating frequency synthesizer", January 18, 1990).

The invention can substantially improve the sensitivity of the receiver; also, the location sensitivity of the reception to small movements is substantially reduced. The radio telephone operates preferably within the frequency range of a reception frequency of 1 2 GHz, in which case the antennas can advantageously be fitted in a product the size of a handheld telephone, since the mutual distance of the antennas will be approx. 10 cm, which is in the same order of magnitude as the length of the halfwave of radiation at a frequency of 1 2 GHz. By this, fading distances of the same order of magnitude, appearing in microcellular networks and in intrabuilding radio networks, can be compensated for effectively.

The invention is described below with the help of an embodiment example, with reference to the accompanying drawing, which depicts a simplified block diagram of a radio telephone according to the invention.

The figure shows the space diversity reception part of the inventional radio telephone, having two antennas ANT1, reference numeral 1 (transmission/reception, Rx/Tx) and ANT2, reference numeral 7 (reception, Rx). From each antenna branch the received signal is fed via a filter 2, 8, an amplifier 3, 9 and a second filter 4, 10 to a mixer 5 and respectively 11. To the Rx/Tx antenna 1 it is also possible to feed the signal Tx to be transmitted from the radio telephone via an amplifier 6 and a bandpass filter 2 (the other transmission-side components, known per se, are not shown).

The received radio-frequency signal rfl fed to the mixer 5 is mixed with the oscillator output signal lol generated by the first local oscillator 30 (1.LO). The intermediate-frequency signal if1, which is the mixing result, is fed to the summing means 21. Respectively, the radio-frequency signal rf2 fed to the mixer 11 is mixed with the oscillator output signal 1o2 generated by the first local oscillator 1.LO. The intermediate-frequency signal if2, which is the mixing result, is also fed to the summing means 21.

The sum signal obtained from the summing means 21 is fed, via a bandpass filter 22 and an amplifier 23, to a second mixer 24, to which the output signal of the second local oscillator 26 (2.LO) is also fed. The mixing result is fed to a detector 25 (FM-DET); the demodulated signal obtained from the output of the detector is fed further to the radio telephone's other circuits, known per se, which are not shown in the figure.

According to the invention, the intermediate-frequency signal is maximized in a closed control loop. The figure shows, by way of example, an intermediate-frequency signal 1.IF, which, modified in a control circuit 40 not described in greater detail, is fed as a control signal CS to the first local oscillator 30 (1.LO). The control signal CS is used for regulating the phase difference between the output signals if1 and if2 of the first local oscillator in such a manner that the amplitude of the desired intermediate-frequency signal 1.IF will reach its maximum value.

The signal CS may be either an analog voltage or a digital value. The control circuit 40 may contain algorithms for searching for a constant value of CS (corresponding to the fixed phase difference between the signals rf1 and rf2) for the maximization of 1.IF, or predicting algorithms, for example, for searching for a CS value changing at a constant speed, corresponding to the changing phase difference of the signals rf1 and rf2 when the receiver is on the move. In another embodiment, the circuit (40) searches for the maximum value of the sum signal (1.IF) and, the phase difference between the signals (rf1, rf2) being variable, adapts the control signal (CS) to the speed of the change.

The first local oscillator 30 (1.LO) is a double oscillator the parts of which are indicated by 30a (LOl) and 30b (LO2). The sub-oscillator used is preferably an integrated interpolating frequency synthesizer, known per se, the structure of which is not presented here in greater detail.

The reference frequency controlling the sub-oscillators is a signal fc, and the operation is switched on and off by means of signal ON/OFF. The frequency of the output signals of the oscillators 30a and 30b is f = f1. The phase of the output signal of the sub-oscillator 30a (LO1) is F = F1. By means of the control signal CS the phase of the output signal of the second sub-oscillator 30b (LO2) is set at F = F1 + DF. The phase difference DF is set so that the strength of the intermediate-frequency signal 1.IF is maximized.

The interpolating frequency synthesizer is based on a digital phase lock, in which case the control algorithm used in it can be selected to correspond to the operational need in each given case.

The advantages derived from using the invention include, in addition to an improved sensitivity of the reception and a reduced fading tendency, also a simplicity of the implementation and a capacity to adapt, through the continuous-phasing characteristic of the invention, to changing reception conditions.

For an expert in the art it will be obvious on the basis of the above description that the described space diversity reception method based on continuous phasing is also applicable to reception architectures of other types, such as a direct-conversion or zero intermediate-frequency receiver or arrangements having a plurality of intermediate frequencies.

The invention is as such also applicable to arrangements with more than two antennas.

## Claims

1. A space diversity radio receiver for a radio telephone, comprising:
at least two antennas (1, 7);
a plurality of mixers (5, 11) connected to respective ones of the antennas (1, 7); wherein each mixer is supplied with a mixing frequency signal (lo1, lo2) from a respective local oscillator and provides an intermediate frequency signal (if1, if2);
means (21) for summing the intermediate frequency signals (if1, if2) to obtain a sum signal; and
a control circuit, responsive to the sum signal, to regulate in a closed loop phase differences between the intermediate frequency signals (if1, if2),
wherein the sum signal is fed to other circuits of the receiver;
a frequency synthesizer (30) responsive to the control circuit, in which, by means of a phase lock loop the phase signal from one of the local oscillators is adjusted so as to maximize the sum signal of the intermediate frequency signals (if1, if2).

2. A radio receiver according to Claim 1, wherein the frequency synthesizer is an interpolating frequency synthesizer.

3. A radio receiver according to Claims 1 or 2, wherein, the control circuit (40) searches for the maximum value of the sum signal (1.IF) and, the phase difference between the signals (rf1, rf2) being variable, adapts the control signal (CS) to the speed of the change.

## Patentansprüche

1. Raum-Diversity-Funkempfänger für ein Funktelefon, mit:
mindestens zwei Antennen (1,7);
einer Mehrzahl von Mischern (5, 11), die jeweils mit einer der Antennen (1,7) verbunden sind, wobei jeder Mischer von einem jeweiligen Überlagerungsoszillator mit einem Mischfrequenzsignal (lo1,lo2) versorgt wird und ein Zwischenfrequenzsignal (if1,if2) liefert;
Mitteln (21), um zur Erzeugung eines Summensignals die Zwischenfrequenzsignale (if1,if2) zu summieren;
einer auf das Summensignal antwortenden Steuerschaltung, um in einem Regelkreis Phasendifferenzen zwischen den Zwischenfrequenzsignalen (if1,if2) zu regeln, wobei das Summensignal an andere Schaltungen des Empfängers weitergeleitet wird; und
einem Frequenzsynthesizer (30), der auf die Steuerschaltung antwortet, um mit Hilfe des Phasenregelkreises das Phasensignal von einem der Überlagerungsoszillatoren derart abzugleichen, daß das Summensignal der Zwischenfrequenzsignale (if1,if2) einen maximalen Wert annimmt.

2. Funkempfänger nach Anspruch 1, bei dem der Frequenzsynthesizer als interpolierender Frequenzsynthesizer ausgebildet ist.

3. Funkempfänger nach Anspruch 1 oder 2, bei dem die Steuerschaltung (40) nach dem Maximum des Summensignals (1.IF) sucht und, da sich die Phasendifferenz zwischen den Signalen (rf1, rf2) ändert, das Steuersignal (CS) an die Geschwindigkeit der Änderung anpaßt.

## Revendications

1. Radiorécepteur en diversité spatiale pour un radiotéléphone, comprenant :
au moins deux antennes (1, 7);
une pluralité de mélangeurs (5, 11) connectés à des antennes respectives (1, 7), chaque mélangeur étant alimenté avec un signal de fréquence à mélanger (1o1, 1o2) par un oscillateur local respectif et fournissant un signal de fréquence intermédiaire (if1, if2);
un moyen (21) pour additionner les signaux de fréquence intermédiaire (if1, if2) pour obtenir un signal somme;
un circuit de commande, réagissant au signal somme, pour réguler, en boucle fermée, les différences de phase entre les signaux de fréquence intermédiaire (if1, if2),
le signal somme étant fourni à d'autres circuits du récepteur; et
un synthétiseur de fréquence (30), réagissant aux circuits de commande, dans lequel, grâce à une boucle à phase asservie, le signal de phase d'un des oscillateurs locaux est ajusté de manière à maximiser le signal somme obtenu à partir des signaux de fréquence intermédiaire (if1, if2).

2. Radiorécepteur selon la revendication 1, dans lequel le synthétiseur de fréquence est un synthétiseur de fréquence à interpolation.

3. Radiorécepteur selon la revendication 1 ou la revendication 2, dans lequel le circuit de commande (40) recherche la valeur maximale du signal somme (1.IF) et, comme la différence de phase entre les signaux (rf1, rf2) est variable, adapte le signal de commande (CS) à la vitesse du changement.
